(19) Europäisches Patentamt
European Patent Office
Office européen des brevets

(11) **EP 4 437 867 A1**

(12) **EUROPEAN PATENT APPLICATION**
published in accordance with Art. 153(4) EPC

(43) Date of publication:
**02.10.2024 Bulletin 2024/40**

(21) Application number: **22916664.0**

(22) Date of filing: **26.12.2022**

(51) International Patent Classification (IPC):
*A24D 3/06* $^{(2006.01)}$     *A24D 3/08* $^{(2006.01)}$
*D01F 2/00* $^{(2006.01)}$     *D01D 5/06* $^{(2006.01)}$
*D01D 5/22* $^{(2006.01)}$     *B01D 39/18* $^{(2006.01)}$

(52) Cooperative Patent Classification (CPC):
**A24D 3/06; A24D 3/08; A24D 3/10; B01D 39/18;
D01D 5/06; D01D 5/22; D01F 2/00**

(86) International application number:
**PCT/KR2022/021314**

(87) International publication number:
**WO 2023/128523 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **28.12.2021 KR 20210190178**

(71) Applicants:
• **Kolon Industries, Inc.**
  **Seoul 07793 (KR)**
• **KT&G Corporation**
  **Daedeok-gu**
  **Daejeon 34337 (KR)**

(72) Inventors:
• **JIN, Sang Woo**
  **Seoul 07793 (KR)**
• **JEONG, Jong Cheol**
  **Seoul 07793 (KR)**

• **LEE, Jeong Hun**
  **Seoul 07793 (KR)**
• **SEO, Seung Dong**
  **Seoul 07793 (KR)**
• **HWANG, Yeong Nam**
  **Seoul 07793 (KR)**
• **MA, Kyengbae**
  **Daejeon 34128 (KR)**
• **YANG, Jin-Chul**
  **Daejeon 34128 (KR)**
• **CHEONG, Bong Su**
  **Daejeon 34128 (KR)**
• **HA, Sunghoon**
  **Daejeon 34128 (KR)**

(74) Representative: **Ter Meer Steinmeister & Partner
Patentanwälte mbB
Nymphenburger Straße 4
80335 München (DE)**

(54) **LYOCELL MATERIAL WITH MODIFIED CROSS SECTION, CIGARETTE FILTER, AND MANUFACTURING METHOD THEREFOR**

(57)     The present application relates to a lyocell material with a modified cross section, a cigarette filter including the lyocell material, and methods of manufacturing the lyocell material and the cigarette filter. The lyocell material and the cigarette filter including the same replace conventional cellulose acetate materials and filters, and provide excellent filter manufacturing processability and excellent cigarette properties (e.g., draw resistance) in addition to excellent biodegradability.

EP 4 437 867 A1

## Description

## Technical Field

The present application relates to a lyocell material with a modified cross section, a cigarette filter including the lyocell material, and manufacturing methods of the lyocell material and the cigarette filter.

## Background Art

Cellulose acetate fibers have been mainly used as cigarette filter materials. Cellulose acetate is known as a biodegradable material, but a cigarette filter consisting of cellulose acetate remains in its original form for one or two years even after being buried in the soil, and it takes a considerable amount of time for complete biodegradation. Considering cigarette products that are used for smoking and then collected as a waste and landfilled as well as the quantity and toxicity of cigarette products that are littered and left in the living environment, there is a need to further improve biodegradability of cigarette filters.

On the other hand, since a cigarette is an item of personal preference enjoyed by inhaling the smoke generated during combustion, the more uniform the concentration of the smoking smoke is, the better the quality of cigarettes can be evaluated. One of items that can be evaluated in relation to the concentration uniformity of the smoking smoke is draw resistance, and draw resistance is known to tend to increase proportionally as the filtration efficiency of a filter. That is, a cigarette filter with good draw resistance not only provides good filtration performance against harmful substances, but also provide good user satisfaction (quality).

Therefore, there is a need to develop a filter material that can replace the conventional cellulose acetate materials and also achieve filter properties, such as draw resistance, at a level equivalent to or higher than a technology in the art.

## Disclosure

## Technical Problem

One purpose of the present application is to provide a lyocell material that can replace cellulose acetate commercially available for cigarette filters.

Another purpose of the present application is to provide a lyocell material for a cigarette filter, the lyocell material being eco-friendly in its manufacturing process and having excellent biodegradability upon disposal.

Another purpose of the present application is to provide a lyocell material with a modified cross section having a predetermined shape or form, such as satisfying a modified shape ratio and a width ratio described later.

Another purpose of the present application is to provide a lyocell material for a cigarette filter, the lyocell material being able to sufficiently satisfy or improve properties (e.g., draw resistance) of a cigarette filter material.

Another purpose of the present application is to provide a lyocell filter for a cigarette.

Another purpose of the present application is to provide a cigarette including the lyocell filter.

Another purpose of the present application is to improve processability related to the manufacturing of the lyocell material, the lyocell filter, and the cigarette.

The aforementioned and other purposes of the present application can be all solved by the disclosure of the present application described in detail below.

## Technical Solution

According to an embodiment of the present application, a lyocell material (e.g., a material satisfying a modified shape ratio and a width ratio described later) having a modified cross section in a predetermined shape, a cigarette filter including the lyocell material, and manufacturing methods of the lyocell material and the cigarette filter are provided.

In detail, the inventors of the present application confirm that, as described below, a modified cross section yarn satisfying predetermined shape and fineness can provide excellent filtration functions (e.g., draw resistance) due to a higher specific surface area than a circular cross section yarn or the like, thereby achieving the disclosure of a lyocell material with a configuration described later, a cigarette filter including the lyocell material, and manufacturing methods of the lyocell material and the cigarette filter.

Hereinafter, the lyocell material, the cigarette filter including the lyocell material, and the manufacturing methods of the lyocell material and the cigarette filter according to the present application will be described in more detail.

In an embodiment related to the present application, the present application relates to a method of manufacturing a modified cross section lyocell material satisfying a predetermined shape and fineness. The lyocell material may be used to prepare a cigarette filter.

In detail, the method may include: spinning a lyocell dope by using a spinneret that is capable of forming a modified cross section having at least three projections; obtaining a lyocell multifilament by coagulating the lyocell dope that has undergone the spinning; oil-treating the lyocell multifilament; and to supply steam and pressure to the lyocell multifilament, feeding the lyocell multifilament that has undergone the oil-treating into a crimp machine to provide crimps. In addition, the lyocell multifilament manufactured through the process above, (e.g., oil-treated lyocell multifilament) may have a total fineness of 15,000 denier to 45,000 denier, and monofilaments constituting the lyocell multifilament may have a single fiber fineness of 1.5 denier to 8.0 denier.

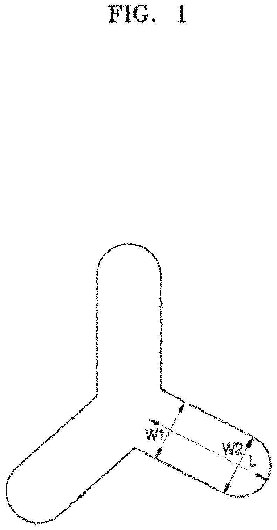

The lyocell material manufactured according to the method may have a modified cross section. The term "modified cross section" may refer to a case where a cross section is not circular but a shape with a plurality of projections. For example, as shown in FIG. 1, a cross section in which a plurality of projections (e.g., three or more projections) extend from the center may be referred to as a modified cross section.

In an embodiment, the modified cross section lyocell material of the present application may have three or more projections branching from the center. In one or more embodiments, the modified cross section lyocell material may have a cross section in which four, five, or more modified projections extend in different directions from the center.

Although not particularly limited, a case having three projections may have a Y-shaped cross section, and a case having four projections may have a cross-shaped cross section.

In an embodiment of the present application, the modified cross section of the lyocell material manufactured according to the method may satisfy predetermined modified shape ratio and width ratio.

In detail, each projection extending from the center may have, in relation to the shape, a modified shape ratio of 0.6 or more as calculated by Equation 1, and a width ratio of 0.5 to 2.0 as calculated by Equation 2:

$$<\text{Equation 1}>$$
$$\text{Modified shape ratio} = L/W$$

$$<\text{Equation 2}>$$
$$\text{Width ratio} = W_1/W_2.$$

Regarding the modified shape ratio, L represents a length of the projection extending from the center, or a length extending in the direction in which the projection branches. In detail, L referring to the length of the projection may be calculated as the distance (e.g., longest distance or length) from the center of a straight line corresponding to the width of a projection (of which the length is to be obtained) connecting two points where one projection meets each of two projections directly adjacent to the one projection to the end point of the one projection.

Regarding the modified shape ratio, W represents a width of the projection. In detail, based on a line representing the length L of the given projection as described above (i.e., based on L as the baseline in FIG. 1), W is calculated as the arithmetic mean value ($W=(W_1 + W_2)/2$) of the projection width $W_1$ at a point corresponding to 10 % of the baseline length and the projection width $W_2$ at a point corresponding to 90 % of the baseline length. When calculating the projection widths W, $W_1$, and $W_2$, the straight line for calculating the projection widths W, $W_1$, and $W_2$ may be perpendicular to the projection length L.

In an embodiment, the length L and width W of the projection for calculating the modified shape ratio may be an arithmetic average value obtained by calculating the length and width for each projection in the modified cross section of the monofilament and then dividing it by the number of projections.

In an embodiment of the present application, L may be greater than W.

When a tow having the aforementioned modified cross section is applied to a cigarette filter, filter properties (e.g., draw resistance, filter circumference, etc.) may be uniformly implemented.

In an embodiment, the modified shape ratio (Equation 1) of the modified cross section lyocell material as calculated as described above may be 0.7 or more, 0.8 or more, 0.9 or more, 1.0 or more, 1.1 or more, 1.2 or more, 1.3 or more, 1.4 or more, 1.5 or more, 1.6 or more, 1.7 or more, 1.8 or more, 1.9 or more, 2.0 or more, 2.1 or more, 2.2 or more, 2.3 or more, 2.4 or more, or 2.5 or more. Also, the upper limit of the modified shape ratio may be, for example, 4.0 or less, 3.5 or less, for example, 3.0 or less, 2.9 or less, 2.8 or less, 2.7 or less, 2.6 or less, 2.5 or less, 2.4 or less, 2.3 or less, 2.2 or less, 2.1 or less, or 2.0 or less.

In an embodiment, the width ratio (Equation 2) of the lyocell material as calculated as described above may be 0.6 or more, 0.7 or more, 0.8 or more, 0.9 or more, 1.0 or more, 1.1 or more, 1.2 or more, 1.3 or more, 1.4 or more, 1.5 or more, 1.6 or more, 1.7 or more, or 1.8 or more. Also, the upper limit of the width ratio may be 1.9 or less, 1.8 or less, 1.7 or less, 1.6 or less, 1.5 or less, 1.4 or less, 1.3 or less, 1.2 or less, or 1.1 or less.

Modified cross section fibers satisfying the modified shape ratio and the width ratio may have an increased surface area so that the performance of removing the smoke may be improved compared to circular cross section fibers or modified cross section fibers not satisfying the modified shape ratio and the width ratio.

Also, when the modified shape ratio (Equation 1) and the width ratio (Equation 2) above are smaller than the values described above, the specific surface area may gradually converge to the circular cross sectional area, and thus a sufficient specific surface area may not be obtained. Also, when the modified shape ratio (Equation 1) and the width ratio (Equation 2) above exceeds the values described above, it is difficult to realize the filter properties (e.g., draw resistance) even if filaments in the same or similar amount (e.g., grams (g)) are filled in the manufacture of a filter during the preparation of a cigarette filter, because the effect of providing a large specific surface area, which is the property of the modified cross section, is reduced.

Hereinafter, the method of manufacturing the lyocell material according to an embodiment of the present application will be described in detail.


(a) Spinning of lyocell dope

This process is a process of spinning a lyocell spinning dope by using a spinneret for forming a modified cross section with at least three projections. The spinning dope may include a lyocell dope, i.e., cellulose (or cellulose pulp) and N-methylmorpholine-N-oxide (NMMO).

Here, types or designed shapes of the spinneret that can form a modified cross section with at least three projections are not particularly limited. For example, a spinneret having a shape corresponding to three or more projections may be used. Alternatively, a spinning device having a plurality of unit holes, in which at least three holes are formed adjacently so as to form three or more projections, may be used.

Commercially available cellulose acetate filters are pointed out as the main cause of occurrence of microplastics. However, as an amine oxide-based solvent used in the production of lyocell fibers is recyclable and biodegradable even upon disposal, lyocell materials do not generate any pollutants in its production process. Furthermore, a lyocell tow is biodegradable and can be removed within a relatively short period of time, lyocell is regarded as a more eco-friendly material than cellulose acetate.

In an embodiment, an amount of cellulose in the spinning dope may be, based on a total weight of 100 wt% of the dope, 5 wt% to 15 wt%. When the amount of cellulose is excessively small, it is difficult to implement the properties of lyocell fibers, and when the amount of cellulose exceeds the range above, it is difficult to dissolve cellulose in a solvent. In this consideration, the amount of cellulose in the spinning dope may be 6 wt% or more, 7 wt% or more, 8 wt% or more, 9 wt% or more, or 10 wt% or more, and the upper limit of the amount of cellulose may be, for example, 14 wt% or less, 13 wt% or less, 12 wt% or less, 11 wt% or less, 10 wt% or less, or 9 wt% or less.

In an embodiment, the spinning dope may include an aqueous solution of NMMO. In consideration of a degree of dissolution of cellulose and process temperature, the aqueous solution may include, for example, 80 to 95 weight ratio of NMMO and 5 to 20 weight ratio of water.

In an embodiment, the cellulose or cellulose pulp may include alpha-cellulose in an amount of 85 wt% to 97 wt%, based on 100 wt% of total cellulose.

Also, in an embodiment of the present application, a weight-average degree of polymerization (DPw) of the cellulose may be 600 to 1,700.

A nozzle temperature of the spinneret, specifically, a spinning temperature may be appropriately selected by those skilled in the art. Considering that viscosity of the spinning dope varies depending on the spinning temperature and discharging may not be easily done, the spinning dope may be, for example, 100 °C to 120 °C or 100 °C to 110 °C.

In an embodiment, the spinning may be performed under controlled spinning conditions to satisfy the fineness of the monofilament and/or multifilament. For example, the spinning of the spinning dope may be performed under controlled spinning conditions such that the single fiber fineness of the filament may be 1.5 denier to 8.0 denier. For example, one or more spinning conditions selected from an amount of the spinning dope to be discharged and a spinning rate of the spinning dope may be appropriately controlled so that the single fiber fineness of the filament forming a lyocell material may satisfy the range of 1.5 denier to 8.0 denier. Herein, the single fiber fineness of the filament refers to fineness of a single monofilament separated from the multifilament. Also, in some cases, the total fineness may be controlled to a predetermined range by adjusting the number of filament strands.

In detail, the single fiber fineness of the filament may be, for example, 7.5 denier or less, 7.0 denier or less, 6.5 denier or less, 6.0 denier or less, 5.5 denier or less, 5.0 denier or less, or 4.5 denier or less. Also, the lower limit of the single fiber fineness of the filament may be, for example, 2.0 denier or more, 2.5 denier or more, 3.0 denier or more, 3.5 denier or more, 4.0 denier or more, 5.0 denier or more, 5.5 denier or more, or 6.0 denier or more. Satisfying the range above may be more advantageous in realizing stable draw resistance and ensuring processability of a cigarette filter.

The spinning dope discharged from the spinneret may undergo coagulation described below.

(b) Coagulating and obtaining of multifilament

In this process, the lyocell spinning dope spun is coagulated, thereby obtaining a lyocell multifilament.

For the coagulation, a method in which the spinning dope comes into contact with air and/or a coagulation solution may be used.

In an embodiment, the coagulating may include: primary coagulation including supplying cold air to the spun lyocell dope; and secondary coagulation including immersing the primarily coagulated spinning dope in a coagulation solution.

According to the aforementioned coagulation method, the lyocell dope discharged from the spinneret may be primarily coagulated in a space (air gap zone) between the spinneret and a coagulation bath. In the air gap zone, for example, the cold air may be supplied outwards from the inside of the spinneret, starting from an air-cooling part positioned inside the spinneret. In addition, the primary coagulation may be carried out by a so-called air quenching method or means known in the related field.

In an embodiment, the upper temperature of the cold air in the primary coagulation may be, for example, 15 °C or less. In detail, the cold air may be air at a temperature of 14 °C or less, 13 °C or less, 12 °C or less, 11 °C or less, or 10 °C or less. When the temperature exceeds the above temperature, the coagulation of the spinning dope using the cold air may not be sufficient, and spinning-related processability may not be good.

The lower limit of the cold air may be determined in consideration of spinning processability and/or cross sectional uniformity of the filament. For example, when the temperature of the cold air is lower than 4 °C, the surface of the spinneret may be cooled, the surface of the filament may become non-uniform, and the spinning processability may also deteriorate. In this consideration, the temperature of the cold air may be 5 °C or more, 6 °C or more, 7 °C or more, 8°C or more, or 9 °C or more.

The degree to which the cold air is supplied may be adjusted by considering sufficient coagulation, spinning processability, and effects on the physical properties of the filament. For example, the air may be supplied to the spinning dope at an airflow rate of 70 $Nm^3$/h to 300 $Nm^3$/h. More specifically, the airflow rate may be 100 $Nm^3$/h or more or 150 $Nm^3$/h or more, and the upper limit of the airflow rate may be, for example, 250 $Nm^3$/h or less or 200 $Nm^3$/h or less.

After the primary coagulation as described above, the cooled spinning dope may be supplied into a coagulation tank or bath containing the coagulation solution (secondary coagulation). For proper coagulation, the temperature of the coagulation solution may be, for example, 30 °C or less or 25 °C or less. Also, the temperature of the coagulation solution may be 10 °C or more, 15 °C or more, or 20 °C or more. When maintaining the temperature, the coagulation rate may be appropriately maintained.

Types of the coagulation solution for the secondary coagulation may not be particularly limited. For example, the coagulation solution may contain one or more selected from water and NMMO.

Although not particularly limited, when the coagulation solution contains water and NMMO, the amount of water in the coagulation solution may be 60 wt% to 90 wt%, and the amount of NMMO in the coagulation solution may be 10 wt% to 40 wt%. Also, the coagulation solution may contain 70 wt to 80 wt% of water and 20 wt% to 30 wt% of NMMO. The concentration of the coagulation solution may be controlled to be maintained during the manufacturing process using a sensor or the like.

(c) Washing

As necessary, washing of the multifilament may be carried out after the aforementioned coagulating and obtaining of the multifilament. By this washing process, any residual NMMO and/or other impurities in the filament may be removed.

Methods of the washing are not particularly limited. For example, the washing may be carried out by introducing the coagulated lyocell multifilament into a washing bath by using a towing roller. Alternatively, the washing may be carried out by spraying a washing solution while the multifilament moves to the next step by a towing roller.

Here, components of the washing solution are not particularly limited. For example the washing solution may contain water, and may further contain known additives.

Also, in consideration of reuse after the washing or the like, the washing solution may be used by adjusting the temperature to 100 °C or less.

(d) Oil treating

This process is for applying oil to the surface of the filament to decrease friction applied on the filament and facilitate formation of crimps in the providing crimps described later.

Although not particularly limited, the oil treating may be carried out by immersing the multifilament in a bath filled with oil so that the multifilament is completely immersed in the oil. Alternatively, the oil treating may be carried out by spraying an oil solution while the multifilament moves to the next step by a towing roller.

To ensure that the amount of oil applied onto the multifilament is constant after the oil treating is carried out as described above, before and/or after the oil treatment, a process of squeezing out the oil on the surface of the multifilament may be further carried out by using a located roll or the like.

In an embodiment, the oil treating may be carried out so that the amount of oil may be about 5 wt% or less based on 100 wt% of the oiled multifilament. In detail, the amount of oil in the oil treated multifilament may be 4 wt% or less, 3 wt% or less or 2 wt% or less, and may be 0.5 wt% or more, 1 wt% or more, or 2 wt% or more.

Types of oil that can be used herein is not particularly limited, and any oil known in the art may be used.

In some cases, drying the oil may be carried out after the oil treatment.

In an embodiment of the present application, at least one of the processes described above may be performed under controlled conditions to satisfy the fineness of the aforementioned monofilament and/or multifilament. Herein, the single fiber fineness of the filament refers to fineness of a single monofilament separated from the multifilament.

In detail, the single fiber fineness of the filament may be, for example, 7.5 denier or less, 7.0 denier or less, 6.5 denier or less, 6.0 denier or less, 5.5 denier or less, 5.0 denier or less, 4.5 denier or less, 4.0 denier or less, 3.5 denier or less, or 3.0 denier. Also, the lower limit of the single fiber fineness may be, for example, 2.0 denier or more, 2.5 denier or more, 3.0 denier or more, 3.5 denier or more, or 4.0 denier or more. As will be confirmed in Comparative Examples described later, when the single fiber fineness of the filament is outside the ranges above, the draw resistance of the cigarette filter may be significantly reduced.

Although not particularly limited, the process controlled to ensure the fineness ranges above may be the spinning. Alternatively, to ensure the single fiber fineness ranges above, all processes of the spinning, the coagulating, the washing, and the oil treating may be controlled.

(e) Providing of crimps

The providing of crimps is a process of applying steam and pressure to the oil treated lyocell multifilament to obtain a crimped tow, and in this regard, may be referred to as so-called crimping.

The crimping gives waves to the multifilament, and accordingly fibers may have bulky properties. The crimping may be carried out by using known crimping machines, such as those including a stuffer box and/or a steam box, and crimp machines that can be used herein are not particularly as long as a machine can provide a steam pressure and a roll pressure.

In an embodiment, the providing of crimps may be carried by first supplying stem to the lyocell multifilament to preheat and swell the multifilament, and subsequently pressurizing the multifilament with a press roller to form wrinkles in the multifilament. Here, a steam box may be used to supply steam, and such a steam box may be located at the front of the crimp machine.

In an embodiment, the providing of crimps may be carried out in such a way that pressurizing the multifilament with a press roller and applying steam are carried out simultaneously.

In an embodiment, the providing of crimps may be carried by first supplying stem to the lyocell multifilament to preheat and swell the multifilament, and subsequently pressurizing the multifilament with a press roller and applying stem simultaneously.

In an embodiment, the providing of crimps may be carried out by applying steam of 0.1 kgf/cm$^2$ to 2.0 kgf/cm$^2$ to the multifilament that has been already fed, before feeding the multifilament to the crimp machine (specifically, a press roller). In an embodiment of the present application, the steam of 0.2 kgf/cm$^2$ or more, 0.3 kgf/cm$^2$ or more, 0.4 kgf/cm$^2$ or more, 0.5 kgf/cm$^2$ or more, or 0.6 kgf/cm$^2$ or more may be provided by the steam box. Alternatively, the steam of 1.5 kgf/cm$^2$ or less, 1.4 kgf/cm$^2$ or less, 1.3 kgf/cm$^2$ or less, 1.2 kgf/cm$^2$ or less, 1.1 kgf/cm$^2$ or less, or 1.0 kgf/cm$^2$ or less may be provided by the steam box. When the steam supply or steam pressure is less than the ranges above, the crimps may not be formed smoothly. Also, when the steam supply or steam pressure exceeds the ranges above, the flexibility of the filament increases and excessive crimps are provided within the crimp machine, and thus the filament may not pass through the crimp machine.

In an embodiment, the providing of crimps may be carried out by applying a pressure of 1.5 kgf/cm$^2$ to 4.0 kgf/cm$^2$ to the filament fed into the crimp machine by using a roller. In an embodiment of the present application, the pressure of 1.6 kgf/cm$^2$ or more, 1.7 kgf/cm$^2$ or more, 1.8 kgf/cm$^2$ or more, 1.9 kgf/cm$^2$ or more, 2.0 kgf/cm$^2$ or more, 2.1 kgf/cm$^2$ or more, 2.2 kgf/cm$^2$ or more, 2.3 kgf/cm$^2$ or more, 2.4 kgf/cm$^2$ or more, or 2.5 kgf/cm$^2$ or more may be applied to the multifilament by using a pressure roller. Also, the pressure of 3.9 kgf/cm$^2$ or less, 3.8 kgf/cm$^2$ or less, 3.7 kgf/cm$^2$ or less, 3.6 kgf/cm$^2$ or less, 3.5 kgf/cm$^2$ or less, 3.4 kgf/cm$^2$ or less, 3.3 kgf/cm$^2$ or less, 3.2 kgf/cm$^2$ or less, 3.1 kgf/cm$^2$ or less, 3.0 kgf/cm$^2$ or less, 2.9 kgf/cm$^2$ or less, 2.8 kgf/cm$^2$ or less, 2.7 kgf/cm$^2$ or less, 2.6 kgf/cm$^2$ or less, or 2.5 kgf/cm$^2$ or less may be applied. When the pressure by the roller is less than the ranges above, the desired number of crimps may not be sufficiently formed. Also, when the pressure by the roller exceeds the ranges above, the pressing force may be so strong that the filament may not be smoothly fed into the crimp machine or may not pass through the stuffer box. Wrinkles may be formed in the multifilament by the pressure roller that provides the pressure.

In an embodiment, in the providing of crimps, a doctor blade that provides a predetermined pressure to the multifilament may be used. The doctor blade controls the residence time of the filament fed into the crimper stuffer box, contributing to the number of crimps (which affect the quality and filter performance of a tow). Such a doctor blade may be, for example, located in the movement path of the multifilament that is pressurized by the roller and then discharged from the roller pressure point.

In an embodiment of the present application, the providing of crimps may be carried out by applying the pressure of 0.1 kgf/cm$^2$ to 2.0 kgf/cm$^2$ by using the doctor blade onto the multifilament that has passed through the roller of the crimp machine. The doctor blade may be located in the movement path of the multifilament that is pressurized by the roller and then discharged from the roller pressure point. In an embodiment of the present application, the pressure applied by the doctor blade may be 0.2 kgf/cm$^2$ or more, 0.3 kgf/cm$^2$ or more, 0.4 kgf/cm$^2$ or more, or 0.5 kgf/cm$^2$ or more. Alternatively, the upper limit of the pressure may be, for example, 1.5 kgf/cm$^2$ or less, 1.4 kgf/cm$^2$ or less, 1.3 kgf/cm$^2$ or less, 1.2 kgf/cm$^2$ or less, 1.1 kgf/cm$^2$ or less, or 1.0 kgf/cm$^2$ or less.

In an embodiment, the providing of crimps may be carried out at a temperature range of 120 °C to 250 °C. When the temperature is too low, the shape stabilization effect of crimps may be poor, whereas, when the temperature is too high, the concentration of oil components in the stuffer box may increase, making the formation of crimps difficult. Therefore, in consideration of the steam pressure described above, the temperature may be appropriately controlled at 130 °C or more, 140 °C or more, or 150 °C or more, 200 °C or less, 180 °C or less, or 160 °C or less.

In an embodiment, the providing of crimps may be carried out to satisfy the crimp draft ratio expressed by Expression 1. Here, the pressure applied to the filament fed into the crimp machine may be exerted by the roller.

$$<\text{Expression 1}>$$
$$1.01 \leq \text{crimp draft ratio} \leq 1.30$$

wherein, in Expression 1, the crimp draft ratio is calculated as $V_1/V_0$, wherein $V_0$ represents a movement rate of the filament before feeding the multifilament that has undergone the oil treating into the crimp machine, and $V_1$ represents a passing rate of the filament gripped by a roller in the crimp machine. Here, the passing rate may refer to the rate at which the multifilament that has been fed during the providing of crimps (or introduced into the crimp machine) moves between the steam process and/or press roller process.

The method carried out under the aforementioned conditions may provide uniform crimps to a tow. For example, as will be confirmed in experiments described later, a tow manufactured in Example under the conditions that satisfy Expression 1 is confirmed to have upper and lower limits of a range of the number of crimps of a tow calculated as an arithmetic mean closer than Comparative Example (i.e., ensuring uniformity of tow). Also, a crimped tow manufactured and formed uniformly under the conditions that satisfy Expression 1 can ensure even arrangement of fibers or fiber strands when manufactured into a cigarette filter. Accordingly, the draw resistance at a high level may be provided as will be described later.

Also, the method carried out under the conditions that satisfy Expression 1 may be advantageous in providing a good shape of crimps and good modified shape ratio and width ratio to a tow. The crimped tow having a good shape and satisfying the modified shape ratio and width ratio within the ranges above may be advantageous for improving the draw resistance.

Alternatively, when the ranges of Expression 1 are not satisfied, the tow manufacturing conditions are not appropriate so that the tow cannot be manufactured, or even if the tow can be manufactured, the shape of the manufactured crimps is poor. Also, due to the non-uniformity of the tow, the manufacturing processability of a cigarette filter is not good. As a result, it is difficult to provide a filter with excellent draw resistance.

(f) Others

Following the providing of crimps, appropriate post-processes may be carried out.

In an embodiment, (g) secondary oil treating may be additionally carried out. The secondary oil treating may prevent static electricity from occurring in the tow and provide flexibility to the tow. The secondary oil treating may be the same as or similar to the (d) oil treating described above.

In an embodiment, (h) drying may be additionally carried out. The drying may be, for example, carried out at a temperature ranging from 100 °C to 130 °C. Types or methods of the drying are not particularly limited, and know techniques may be used. For example, the drying may be carried out by applying hot air to a tow, leaving a tow in a temperature-controlled room for a certain period of time, or passing a tow through the temperature-controlled room.

According to an embodiment of the present application, by the providing of crimps, a tow having 20 crimps per inch to 50 crimps per inch may be provided. For example, the number of crimps may be 25 ealinch or more, 30 ealinch or more, 35 ealinch or more, 40 ea/inch or more, or 45 ea/inch or more, and the upper limit of the number of crimps may be, for example, 45 ealinch or less, 40 ea/inch or less, 35 ealinch or less, 30 ealinch or less, or 25 ea/inch or less. The number of crimps and uniformity of crimps may be adjusted through the crimping, for example, by the crimp draft ratio or the like. The crimped tow manufactured according to the method of the present application not only has the aforementioned number of crimps, but also has the crimps uniformly formed as described above, and thus when manufactured into a cigarette filter, the draw resistance at a high level may be provided as will be described later.

According to the present application, a lyocell material (crimped tow) with a fineness appropriate for manufacturing a cigarette filter and ensuring its function may be provided. For example, a crimped tow having a total fineness of 15,000 denier to 45,000 denier may be provided. For example, the lower limit of the total fineness may be, for example, 16,000 or more, 17,000 or more, 18,000 or more, 19,000 or more. or 20,000 or more, and the upper limit of the total fineness may be, for example, 40,000 or less, 35,000 or less, 30,000 or less, or 25,000 or less. When the total fineness is outside the ranges above, the filament may not be filled in a sufficient amount in a filter wrapper, and accordingly, the filter properties (e.g., draw resistance, etc.) may be degraded. Alternatively, when the total fineness of the tow is outside the ranges above, the amount of filament filling a filter wrapper becomes to large so that the filter wrapper may burst, or it may become difficult to control the amount of tow filling to implement the draw resistance required for the cigarette filter.

In an embodiment of the present application, the fineness of the lyocell multifilament may be controlled to an appropriate value depending on the circumference of the cigarette filter.

For example, when the lyocell material is used in an (ultra-)slim filter (e.g., a filter rod with a circumference of 19 mm or more), the total fineness of the lyocell multifilament may be 15,000 denier to 25,000 denier. In detail, the total fineness of the lyocell multifilament used in the ultra-slim filter may be 16,000 denier or more, 17,000 denier or more, 18,000 denier or more, 19,000 denier or more, 20,000 denier or more, 21,000 denier or more, 22,000 denier or more, 23,000 denier or more, or 24,000 denier or more, and may be 24,000 denier or less, 23,000 denier or less, 22,000 denier or less, 21,000 denier or less, 20,000 denier or less, 19,000 denier or less, 18,000 denier or less, 17,000 denier or less, or 16,000 denier or less. In addition, in this case, the single fiber fineness of the lyocell mono filament may be, for example, 4.5 denier or more, for example, 5.0 denier or more, 5.5 denier or more, 6.0 denier or more, 6.5 denier or more, 7.0 denier or more, or 7.5 denier or more.

In one or more embodiment, when the lyocell material is used in a regular filter (e.g., a filter rod with a circumference of 19 mm or more), the total fineness of the lyocell multifilament may be 25,000 denier to 45,000 denier. In detail, the total fineness of the lyocell multifilament used in the regular filter may be 26,000 or more, 27,000 or more, 28,000 or more, 29,000 or more, 30,000 or more, 31,000 or more, 32,000 or more, 33,000 or more, 34,000 or more, 35,000 or more, 36,000 or more, 37,000 or more, 38,000 or more, 39,000 or more, 40,000 or more, 41,000 or more, 42,000 or more, 43,000 or more, or 44,000 or more, and may be 44,000 or less, 43,000 or less, 42,000 or less, 41,000 or less, 40,000 or less, 39,000 or less, 38,000 or less, 37,000 or less, 36,000 or less, 35,000 or less, 34,000 or less, 33,000 or less, 32,000 or less, 31,000 or less, 30,000 or less, 29,000 or less, 28,000 or less, 27,000 or less, or 26,000 or less. In addition, in this case, the single fiber fineness of the lyocell mono filament may be 5.0 denier or less, for example, 4.5 denier or less, for example, 4.5 denier or less, 4.0 denier or less, 3.5 denier or less, 3.0 denier or less, 2.5 denier or less, or 2.0 denier or less.

As such, the present application may provide a lyocell material with a total fineness within the ranges above, specifically, a fineness that can ensure filter performance suitable for a regular filter and an (ultra-)slim filter overall. The total fineness of a tow may be determined by the single fiber fineness of the filament and the number of crimps. In the method of the present application, the single fiber fineness and the number of crimps may be controlled as described above, and accordingly, the aforementioned total fineness of a tow suitable for manufacturing a cigarette filter and its function may be ensured.

In one or more embodiments of the present application, the present application relates to a lyocell material with a modified cross section. The lyocell material with a modified cross section may be, for example, manufactured by the aforementioned method of manufacturing the lyocell material with a modified cross section. In detail, the lyocell material with a modified cross section may be manufactured through all the processes including the spinning, coagulating, washing, oil treating, and providing of crimps.

In detail, the lyocell material with a modified cross section may be a crimped tow manufactured by crimping a lyocell multifilament. Here, the lyocell multifilament may include a monofilament with a modified cross section and have a total fineness of 15,000 denier to 45,000 denier, and the monofilaments constituting the lyocell multifilament may have a single fiber fineness of 1.5 denier to 8.0 denier.

In addition, the modified cross section of the monofilament may have at least three projections, wherein each projection may have a modified shape ratio of 0.6 or more and a width ratio of 0.5 to 2.0. Specific values for these ratios are the same as described above. In addition, as described above, the modified shape ratio and the width ratio may be calculated as follows:

$$\text{<Equation 1>}$$
$$\text{Modified shape ratio} = L/W$$

$$\text{<Equation 2>}$$
$$\text{Width ratio} = W_1/W_2$$

wherein, in Equations 1 and 2, L represents a length of each of the three projections, the length being calculated as a distance from the center of a straight line connecting two points where one projection meets two projections directly adjacent to the one projection to the end point of the one projection. Also, W represents a width of each of the three projections, the width being calculated as an arithmetic mean of a projection width ($W_1$) at a point corresponding to 10 % of the length L and a projection width ($W_2$) at a point corresponding to 90 % of the length L. A detailed description thereof is as follows.

In an embodiment, the lyocell material may be manufactured through a process satisfying at least the following <Expression 1>.

In detail, the lyocell material may be or may include a crimped tow manufactured by being fed into a crimp machine to be able to provide crimps under conditions that satisfy a crimp draft ratio represented by Expression 1:

$$\text{<Expression 1>}$$
$$1.01 \leq \text{crimp draft ratio} \leq 1.30$$

wherein, in Expression 1, the crimp draft ratio is calculated as V1/V0, wherein V0 represents a movement rate of the filament before feeding the multifilament into the crimp machine, and V1 represents a passing rate of the filament gripped by a roller in the crimp machine.

In an embodiment, the crimped tow may have 20 crimps per inch to 50 crimps per inch. Specific values thereof are the same as described above.

In an embodiment, the tow, i.e., the crimped lyocell multifilament, may have a total fineness of 15,000 denier to 45,000 denier. For example, the lyocell multifilament may have a total fineness of 15,000 denier to 25,000 denier or 25,000 denier to 45,000 denier. Specific values thereof are the same as described above.

In an embodiment, the monofilaments constituting the lyocell multifilament may have a single fiber fineness of 1.5 denier to 8.0 denier. Specific values thereof are the same as described above.

As described above, in an embodiment of the present application, the fineness of the lyocell multifilament may be controlled to an appropriate value depending on the circumference of the cigarette filter.

For example, when the lyocell material is used in an (ultra-)slim filter (e.g., a filter rod with a circumference of 19 mm or more), the total fineness of the lyocell multifilament may be 15,000 denier to 25,000 denier. In detail, the total fineness of the lyocell multifilament used in the ultra-slim filter may be 16,000 denier or more, 17,000 denier or more, 18,000 denier or more, 19,000 denier or more, 20,000 denier or more, 21,000 denier or more, 22,000 denier or more, 23,000 denier or more, or 24,000 denier or more, and may be 24,000 denier or less, 23,000 denier or less, 22,000 denier or less, 21,000 denier or less, 20,000 denier or less, 19,000 denier or less, 18,000 denier or less, 17,000 denier or less, or 16,000 denier or less. In addition, in this case, the single fiber fineness of the lyocell mono filament may be, for example, 4.5 denier or more, for example, 5.0 denier or more, 5.5 denier or more, 6.0 denier or more, 6.5 denier or more, 7.0 denier or more, or 7.5 denier or more.

In one or more embodiment, when the lyocell material is used in a regular filter (e.g., a filter rod with a circumference of 19 mm or more), the total fineness of the lyocell multifilament may be 25,000 denier to 45,000 denier. In detail, the total fineness of the lyocell multifilament used in the regular filter may be 26,000 or more, 27,000 or more, 28,000 or more, 29,000 or more, 30,000 or more, 31,000 or more, 32,000 or more, 33,000 or more, 34,000 or more, 35,000 or more, 36,000 or more, 37,000 or more, 38,000 or more, 39,000 or more, 40,000 or more, 41,000 or more, 42,000 or more, 43,000 or more, or 44,000 or more, and may be 44,000 or less, 43,000 or less, 42,000 or less, 41,000 or less, 40,000 or less, 39,000 or less, 38,000 or less, 37,000 or less, 36,000 or less, 35,000 or less, 34,000 or less, 33,000 or less, 32,000 or less, 31,000 or less, 30,000 or less, 29,000 or less, 28,000 or less, 27,000 or less, or 26,000 or less. In addition, in this case, the single fiber fineness of the lyocell mono filament may be 5.0 denier or less, for example, 4.5 denier or less, for example, 4.5 denier or less, 4.0 denier or less, 3.5 denier or less, 3.0 denier or less, 2.5 denier or less, or 2.0 denier or less.

As such, according to the present application, the lyocell material with a controlled fineness may be provided so that the filter performance for a regular filter and an (ultra-)slim filter may be ensured overall.

Other descriptions regarding the lyocell material are the same as those described in connection with the method of manufacturing the lyocell material, and thus will be omitted.

In one or more embodiments of the present application, the present application relates to a method of manufacturing a cigarette filter. This method may include all processes of the aforementioned method of manufacturing the lyocell material with a modified cross section lyocell material.

In detail, this method of manufacturing a cigarette filter may include: spinning a lyocell dope by using a spinneret that is capable of forming a modified cross section having at least three projections; coagulating the lyocell dope spun to obtain a lyocell multifilament; oil treating the lyocell multifilament; providing crimps by feeding the lyocell multifilament that has undergone the oil treating into a crimp machine such that the lyocell multifilament is supplied with steam and pressure; and preparing a filter by using a tow provided with the crimps.

In addition, regarding the method of manufacturing a cigarette filter(specifically regarding the manufacturing process of a lyocell material), at least one of the processes may be performed under controlled conditions such that the lyocell multifilament has a total fineness of 15,000 denier to 45,000 denier, and monofilaments constituting the lyocell multifilament have a single fiber fineness of 1.5 denier to 8.0 denier.

Among the processes related to the method of manufacturing a cigarette filter, those that overlap with the processes described for the lyocell material are omitted because the contents are the same.

Regarding the method of manufacturing a cigarette filter, a lyocell material with a modified cross section used in the method of manufacturing a cigarette filter may be a crimped tow manufactured by crimping the lyocell multifilament. Here, the lyocell multifilament may include a monofilament with a modified cross section and have a total fineness of 15,000 denier to 45,000 denier, and the monofilaments constituting the lyocell multifilament may have a single fiber fineness of 1.5 denier to 8.0 denier. In addition, the modified cross section of the monofilament may have at least three projections, wherein each projection may have a modified shape ratio of 0.6 or more and a width ratio of 0.5 to 2.0. Specific values for these ratios are the same as described above. In addition, as described above, the modified shape ratio and the width ratio may be calculated as follows:

$$<\text{Equation 1}>$$
$$\text{Modified shape ratio} = L/W$$

$$<\text{Equation 2}>$$
$$\text{Width ratio} = W_1/W_2$$

wherein, in Equations 1 and 2, L represents a length of each of the three projections, the length being calculated as a distance from the center of a straight line connecting two points where one projection meets two projections directly adjacent to the one projection to the end point of the one projection. Also, W represents a width of each of the three projections, the width being calculated as an arithmetic mean of a projection width ($W_1$) at a point corresponding to 10 % of the length L and a projection width ($W_2$) at a point corresponding to 90 % of the length L. A detailed description thereof is as follows.

In an embodiment, the providing of crimps may be carried out to satisfy the crimp draft ratio expressed by <Expression 1>:

$$<\text{Expression 1}>$$
$$1.01 \leq \text{crimp draft ratio} \leq 1.30$$

wherein, in Expression 1, the crimp draft ratio is calculated as V1/V0, wherein V0 represents a movement rate of the filament before feeding the multifilament that has undergone the oil treating into the crimp machine, and V1 represents a passing rate of the filament gripped by a roller in the crimp machine.

In an embodiment, the crimped tow may have 20 crimps per inch to 50 crimps per inch. A detailed description of thereof is the same as described above, and thus will be omitted.

Post-processes following the providing of crimps in the method of manufacturing a cigarette filter may be appropriately carried out by those skilled in the art according to known methods. For example, a cigarette filter may be manufactured by forming a rod shape from a tow-filled wrapper (also called as wrapping paper, a filter paper, or a filter wrapper). Alternatively, a cigarette filter may be manufactured by cutting a rod-shaped filter paper filled with the tow to an appropriate length.

The wrapper may be porous paper or non-porous paper that wraps the aforementioned lyocell tow (i.e., the tow at least oiled and provided with crimps) and can maintain a filter shape (e.g., column or cylinder).

In an embodiment, when porous wrapper is used, the wrapper may have a porosity of 10 Coresta unit (CU) to 50,000 CU. In detail, the lower limit of the porosity of the wrapper may be, for example, 1000 CU or more, 5000 CU or more, 10000 CU or more, 15000 CU or more, 20000 CU or more, 25000 CU or more, 30000 CU or more, 35000 CU or more, 40000 CU or more, or 45000 CU or more, and the upper limit of the porosity of the wrapper may be, for example, 45000 CU or less, 40000 CU or less, 35000 CU or less, 30000 CU or less, 25000 CU or less, 20000 CU or less, 15000 CU or less, 10000 CU or less, or 5000 CU or less.

In an embodiment of the present application, the cigarette filter may have predetermined shape and size.

For example, the cigarette filter may have a rod shape. More specifically, the cigarette filter may have a cylinder-like shape.

Also, the cigarette filter may have, for example, a length of 10 mm to 150 mm. In detail, the lower limit of the length of the cigarette filter may be 20 mm or more, 30 mm or more, 40 mm or more, 50 mm or more, 60 mm or more, 70 mm or more, 80 mm or more, 90 mm or more, 100 mm or more, 110 mm or more, 120 mm or more, 130 mm or more, 140 mm or more, or 150 mm or more. Also, the upper limit of the length of the cigarette filter may be 150 mm or less, 140 mm or less, 130 mm or less, 120 mm or less, 110 mm or less, 100 mm or less, 90 mm or less, 80 mm or less, 70 mm or less, 60 mm or less, 70 mm or less, 60 mm or less, 50 mm or less, 40 mm or less, 30 mm or less, or 20 mm or less.

In an embodiment of the present application, the cigarette filter having the length within the ranges above may have a circular cross section, and the circular cross section may have a circumference of 10 mm to 30 mm. For example, the lower limit of the circumference of the cigarette filter may be 15 mm or more, 20 mm or more or 25 mm or more, and the upper limit of the circumference of the cigarette filter may be 25 mm or less, 20 mm or less, or 15 mm or less.

Although not particularly limited, the tow may be opened or treated with a plasticizer, before filling the filter paper with the tow.

In an embodiment, the cigarette filter manufactured by the method may satisfy a draw resistance of 185 mmH$_2$O or more as measured according to the KS H ISO 6565. In detail, the draw resistance of the cigarette filter may be 190 mmH$_2$O or more, 200 mmH$_2$O or more, 210 mmH$_2$O or more, 220 mmH$_2$O or more, 230 mmH$_2$O or more, 240 mmH$_2$O or more, 250 mmH$_2$O or more, 260 mmH$_2$O or more, 270 mmH$_2$O or more, 280 mmH$_2$O or more, 290 mmH$_2$O or more, 300 mmH$_2$O or more, 310 mmH$_2$O or more, 320 mmH$_2$O or more, 330 mmH$_2$O or more, 340 mmH$_2$O or more, 350 mmH$_2$O or more, 360 mmH$_2$O or more, 370 mmH$_2$O or more, 380 mmH$_2$O or more, 390 mmH$_2$O or more, 400 mmH$_2$O or more, 410 mmH$_2$O or more, 420 mmH$_2$O or more, 430 mmH$_2$O or more, 440 mmH$_2$O or more, or 450 mmH$_2$O or more. Also, the upper limit of the draw resistance may be, for example, 920 mmH$_2$O or less. In detail, the upper limit of the draw resistance may be, for example, 910 mmH$_2$O or less, 900 mmH$_2$O or less, 890 mmH$_2$O or less, 880 mmH$_2$O or less, 870 mmH$_2$O or less, 860 mmH$_2$O or less, 850 mmH$_2$O or less, 840 mmH$_2$O or less, 830 mmH$_2$O or less, 820 mmH$_2$O or less, 810 mmH$_2$O or less, 800 mmH$_2$O or less, 750 mmH$_2$O or less, 650 mmH$_2$O or less, 600 mmH$_2$O or less, 550 mmH$_2$O or less, 500 mmH$_2$O or less, 450 mmH$_2$O or less, 400 mmH$_2$O or less, 390 mmH$_2$O or less, 380 mmH$_2$O or less, 370 mmH$_2$O or less, 360 mmH$_2$O or less, 350 mmH$_2$O or less, 340 mmH$_2$O or less, 330 mmH$_2$O or less, 320 mmH$_2$O or less, 310 mmH$_2$O or less, 300 mmH$_2$O or less, 290 mmH$_2$O or less, 280 mmH$_2$O or less, 270 mmH$_2$O or less, 260 mmH$_2$O or less, 250 mmH$_2$O or less, 240 mmH$_2$O or less, 230 mmH$_2$O or less, 220 mmH$_2$O or less, 210 mmH$_2$O or less, or 200 mmH$_2$O or less.

Although not particularly limited, the draw resistance may be measured for a filter rode having a circumference of 10 mm to 30 mm or 15 mm to 27 mm. The circumference of the cigarette filter may be determined by the number of crimps of the tow, the quality of the tow (e.g., uniformity of crimp shape), etc., and the draw resistance of the cigarette filter may be determined by a fineness and a cross section.

Although not particularly limited, the draw resistance may be measured for a filter rod that includes a wrapper with a porosity of 5000 CU to 15000 CU and has a length ranging from 60 mm to 150 mm.

Although not particularly limited, the draw resistance may be measured for a rod-shaped cigarette filter weighing from 300 mg to 1000 mg, 400 mg to 900 mg, 500 mg to 800 mg, or 600 mg to 700 mg.

Meanwhile, as described above, the present application may provide a lyocell material with a fineness within the ranges above, specifically, a fineness that can ensure filter performance suitable for a regular filter and an (ultra-)slim filter overall. In addition, the cigarette filter including such a lyocell material may have a predetermined draw resistance.

For example, when the lyocell material is used in an (ultra-)slim filter (e.g., a filter rod with a circumference of 19 mm or less, wherein the upper limit of the circumference may be, for example, 18.5 mm or less, 18 mm or less, 17.5 mm or less, 17 mm or less, or 16.5 mm or less, and the lower limit of the circumference may be, for example, 15.0 mm or more, 15.5 mm or more, 16.5 mm or more, 17.0 mm or more, 17.5 mm or more, 18.0 mm or more, or 18.5 mm or more), the lyocell multifilament may have a total fineness ranging from 15,000 denier to 25,000 denier. In detail, the total fineness of the lyocell multifilament used in the ultra-slim filter may be 16,000 denier or more, 17,000 denier or more, 18,000 denier or more, 19,000 denier or more, 20,000 denier or more, 21,000 denier or more, 22,000 denier or more, 23,000 denier or more, or 24,000 denier or more, and may be 24,000 denier or less, 23,000 denier or less, 22,000 denier or less, 21,000 denier or less, 20,000 denier or less, 19,000 denier or less, 18,000 denier or less, 17,000 denier or less, or 16,000 denier or less. In this case, the single fiber fineness of the lyocell mono filament may be, for example, 4.5 denier or more, for example, 5.0 denier or more, 5.5 denier or more, 6.0 denier or more, 6.5 denier or more, 7.0 denier or more, or 7.5 denier or more. The cigarette filter including the lyocell material having such a fineness may have a draw resistance of 370 mmH$_2$O or more as measured according to KS H ISO 6565. In detail, the cigarette filter may have a draw resistance of 380 mmH$_2$O or more, 390 mmH$_2$O or more, 400 mmH$_2$O or more, 410 mmH$_2$O or more, 420 mmH$_2$O or more, 430 mmH$_2$O or more, 440 mmH$_2$O or more, 450 mmH$_2$O or more, 460 mmH$_2$O or more, 470 mmH$_2$O or more, 480 mmH$_2$O or more, 490 mmH$_2$O or more, 500 mmH$_2$O or more, 510 mmH$_2$O or more, 520 mmH$_2$O or more, 530 mmH$_2$O or more, 540 mmH$_2$O or more, 550 mmH$_2$O or more, 560 mmH$_2$O or more, 570 mmH$_2$O or more, 580 mmH$_2$O or more, 590 mmH$_2$O or more, or 600 mmH$_2$O or more. Here, the upper limit of the draw resistance may be, for example, 920 mmH2O or less, specifically, 900 mmH$_2$O or less, 850 mmH$_2$O or less, 800 mmH$_2$O or less, 750 mmH$_2$O or less, 700 mmH$_2$O or less, or 650 mmH$_2$O or less.

In one or more embodiments, when the lyocell material is used in a regular filter (e.g., a filter rod with a circumference of 19 mm or more, wherein, the lower limit of the circumference may be, for example, 19.5 mm or more, 20.0 mm or more, 20.5 mm or more, 21.0 mm or more, 21.5 mm or more, 22.0 mm or more, 22.5 mm or more, 23.0 mm or more, 23.5 mm or more, 24.0 mm or more, 24.5 mm or more, 25 mm or more, 25.5 mm or more, 26.0 mm or more, or 26.5 mm or more, and the upper limit of the circumference may be, for example, 27.0 mm or less, 26.5 mm or less, 26.0 mm or less, 25.5 mm or less, 25.0 mm or less, 24.5 mm or less, 24.0 mm or less, 23.5 mm or less, 23.0 mm or less, 22.5 mm or less, 22.0 mm or less, 21.5 mm or less, 21.0 mm or less, 20.5 mm or less, 20.0 mm or less, or 19.5 mm or less), the lyocell multifilament may have a total fineness ranging from 25,000 denier to 45,000 denier. In detail, the total fineness of the lyocell multifilament used in the regular filter may be 26,000 or more, 27,000 or more, 28,000 or more, 29,000 or more, 30,000 or more, 31,000 or more, 32,000 or more, 33,000 or more, 34,000 or more, 35,000 or more, 36,000 or more, 37,000 or more, 38,000 or more, 39,000 or more, 40,000 or more, 41,000 or more, 42,000 or more, 43,000 or more, or 44,000 or more, and may be 44,000 or less, 43,000 or less, 42,000 or less, 41,000 or less, 40,000 or less, 39,000 or less, 38,000 or less, 37,000 or less, 36,000 or less, 35,000 or less, 34,000 or less, 33,000 or less, 32,000 or less, 31,000 or less, 30,000 or less, 29,000 or less, 28,000 or less, 27,000 or less, or 26,000 or less. In this case, the single fiber fineness of the lyocell mono filament may be 5.0 denier or less, for example, 4.5 denier or less, for example, 4.5 denier or less, 4.0 denier or less, 3.5 denier or less, 3.0 denier or less, 2.5 denier or less, or 2.0 denier or less. The cigarette filter including the lyocell material having such a fineness may have a draw resistance of 185 mmH$_2$O or more as measured according to KS H ISO 6565. In detail, the cigarette filter may have a draw resistance of 190 mmH$_2$O or more, 200 mmH$_2$O or more, 210 mmH$_2$O or more, 220 mmH$_2$O or more, 230 mmH$_2$O or more, 240 mmH$_2$O or more, 250 mmH$_2$O or more, 260 mmH$_2$O or more, 270 mmH$_2$O or more, 280 mmH$_2$O or more, 290 mmH$_2$O or more, 300 mmH$_2$O or more, 310 mmH$_2$O or more, 320 mmH$_2$O or more, 330 mmH$_2$O or more, 340 mmH$_2$O or more, 350 mmH$_2$O or more, 360 mmH$_2$O or more, or 370 mmH$_2$O or more. In addition, the upper limit of the draw resistance may be, for example, 500 mmH$_2$O or less, 450 mmH$_2$O or less, or 400 mmH$_2$O or less.

The cigarette filter having such a draw resistance value may provide concentration uniformity and good filter performance for smoke when a user smokes a cigarette.

In one or more embodiments of the present application, the present application relates to a cigarette filter. The cigarette filter may include a lyocell material with a modified cross section, wherein the lyocell material may be the same as described above.

In detail, the lyocell material with a modified cross section included in the cigarette filter may be a crimped tow manufactured by crimping a lyocell multifilament. In addition, the lyocell multifilament may include a monofilament with a modified cross section and have a total fineness of 15,000 denier to 45,000 denier, and the monofilaments constituting the lyocell multifilament may have a single fiber fineness of 1.5 denier to 8.0 denier. In addition, the modified cross section of the monofilament may have at least three projections, wherein each projection may have a modified shape ratio of 0.6 or more and a width ratio of 0.5 to 2.0. Specific values for these ratios are the same as described above. In addition, as described above, the modified shape ratio and the width ratio may be calculated as follows:

$$<\text{Equation 1}>$$
$$\text{Modified shape ratio} = L/W$$

$$<\text{Equation 2}>$$
$$\text{Width ratio} = W_1/W_2$$

wherein, in Equations 1 and 2, L represents a length of each of the three projections, the length being calculated as a distance from the center of a straight line connecting two points where one projection meets two projections directly adjacent to the one projection to the end point of the one projection. Also, W represents a width of each of the three projections, the width being calculated as an arithmetic mean of a projection width ($W_1$) at a point corresponding to 10 % of the length L and a projection width ($W_2$) at a point corresponding to 90 % of the length L. A detailed description thereof is as follows.

In an embodiment, the lyocell material may be a crimped tow manufactured by being fed into a crimp machine to provide crimps under conditions that satisfy a crimp draft ratio represented by <Expression 1>:

$$<\text{Expression 1}>$$

$$1.01 \leq \text{crimp draft ratio} \leq 1.30$$

wherein, in Expression 1, the crimp draft ratio is calculated as V1/V0, wherein V0 represents a movement rate of the filament before feeding the multifilament into the crimp machine, and V1 represents a passing rate of the filament gripped by a roller in the crimp machine.

In an embodiment, the crimped tow may have 20 crimps per inch to 50 crimps per inch. A detailed description thereof is as follows.

In an embodiment, the lyocell material included in the cigarette filter may be prepared by the aforementioned method of manufacturing a lyocell material. In detail, the lyocell material may be manufactured through all the processes including the spinning, coagulating, washing, oil treating, and providing of crimps.

In an embodiment, the cigarette filter may further include a wrapper. As such, the cigarette filter may include: the lyocell material; and the wrapper surrounding the lyocell material. A detailed description of the wrapper is the same as described above, and thus will be omitted.

In an embodiment, the cigarette filter may satisfy a draw resistance of 185 $mmH_2O$ or more as measured according to the KS H ISO 6565. In detail, the draw resistance of the cigarette filter may be 190 $mmH_2O$ or more, 200 $mmH_2O$ or more, 210 $mmH_2O$ or more, 220 $mmH_2O$ or more, 230 $mmH_2O$ or more, 240 $mmH_2O$ or more, 250 $mmH_2O$ or more, 260 $mmH_2O$ or more, 270 $mmH_2O$ or more, 280 $mmH_2O$ or more, 290 $mmH_2O$ or more, 300 $mmH_2O$ or more, 310 $mmH_2O$ or more, 320 $mmH_2O$ or more, 330 $mmH_2O$ or more, 340 $mmH_2O$ or more, 350 $mmH_2O$ or more, 360 $mmH_2O$ or more, 370 $mmH_2O$ or more, 380 $mmH_2O$ or more, 390 $mmH_2O$ or more, 400 $mmH_2O$ or more, 410 $mmH_2O$ or more, 420 $mmH_2O$ or more, 430 $mmH_2O$ or more, 440 $mmH_2O$ or more, or 450 $mmH_2O$ or more. Also, the upper limit of the draw resistance may be, for example, 920 $mmH_2O$ or less. In detail, the upper limit of the draw resistance may be, for example, 910 $mmH_2O$ or less, 900 $mmH_2O$ or less, 890 $mmH_2O$ or less, 880 $mmH_2O$ or less, 870 $mmH_2O$ or less, 860 $mmH_2O$ or less, 850 $mmH_2O$ or less, 840 $mmH_2O$ or less, 830 $mmH_2O$ or less, 820 $mmH_2O$ or less, 810 $mmH_2O$ or less, 800 $mmH_2O$ or less, 750 $mmH_2O$ or less, 650 $mmH_2O$ or less, 600 $mmH_2O$ or less, 550 $mmH_2O$ or less, 500 $mmH_2O$ or less, 450 $mmH_2O$ or less, 400 $mmH_2O$ or less, and for example, 390 $mmH_2O$ or less, 380 $mmH_2O$ or less, 370 $mmH_2O$ or less, 360 $mmH_2O$ or less, 350 $mmH_2O$ or less, 340 $mmH_2O$ or less, 330 $mmH_2O$ or less, 320 $mmH_2O$ or less, 310 $mmH_2O$ or less, 300 $mmH_2O$ or less, 290 $mmH_2O$ or less, 280 $mmH_2O$ or less, 270 $mmH_2O$ or less, 260 $mmH_2O$ or less, 250 $mmH_2O$ or less, 240 $mmH_2O$ or less, 230 $mmH_2O$ or less, 220 $mmH_2O$ or less, 210 $mmH_2O$ or less, or 200 $mmH_2O$ or less.

Although not particularly limited, the draw resistance may be measured for a filter rode having a circumference of 10 mm to 30 mm or 15 mm to 27 mm. The circumference of the cigarette filter may be determined by the number of crimps of the tow, the quality of the tow (e.g., uniformity of crimp shape), etc., and the draw resistance of the cigarette filter may be determined by a fineness and a cross section.

Although not particularly limited, the draw resistance may be measured for a filter rod that includes a wrapper with a porosity of 5000 CU to 15000 CU and has a length ranging from 60 mm to 150 mm.

Although not particularly limited, the draw resistance may be measured for a rod-shaped cigarette filter weighing from 300 mg to 1000 mg, 400 mg to 900 mg, 500 mg to 800 mg, or 600 mg to 700 mg.

Meanwhile, as described above, the present application may provide a lyocell material with a fineness within the ranges above, specifically, a fineness that can ensure filter performance suitable for a regular filter and an (ultra-)slim filter overall. In addition, the cigarette filter including such a lyocell material may have a predetermined draw resistance.

For example, when the lyocell material is used in an (ultra-)slim filter (e.g., a filter rod with a circumference of 19 mm or less, wherein the upper limit of the circumference may be, for example, 18.5 mm or less, 18 mm or less, 17.5 mm or less, 17 mm or less, or 16.5 mm or less, and the lower limit of the circumference may be, for example, 15.0 mm or more, 15.5 mm or more, 16.5 mm or more, 17.0 mm or more, 17.5 mm or more, 18.0 mm or more, or 18.5 mm or more), the lyocell multifilament may have a total fineness ranging from 15,000 denier to 25,000 denier. In detail, the total fineness of the lyocell multifilament used in the ultra-slim filter may be 16,000 denier or more, 17,000 denier or more, 18,000 denier or more, 19,000 denier or more, 20,000 denier or more, 21,000 denier or more, 22,000 denier or more, 23,000 denier or more, or 24,000 denier or more, and may be 24,000 denier or less, 23,000 denier or less, 22,000 denier or less, 21,000 denier or less, 20,000 denier or less, 19,000 denier or less, 18,000 denier or less, 17,000 denier or less, or 16,000 denier or less. In this case, the single fiber fineness of the lyocell mono filament may be, for example, 4.5 denier or more, for example, 5.0 denier or more, 5.5 denier or more, 6.0 denier or more, 6.5 denier or more, 7.0 denier or more, or 7.5 denier or more. The cigarette filter including the lyocell material having such a fineness may have a draw

resistance of 370 mmH$_2$O or more as measured according to KS H ISO 6565. In detail, the cigarette filter may have a draw resistance of 380 mmH$_2$O or more, 390 mmH$_2$O or more, 400 mmH$_2$O or more, 410 mmH$_2$O or more, 420 mmH$_2$O or more, 430 mmH$_2$O or more, 440 mmH$_2$O or more, 450 mmH$_2$O or more, 460 mmH$_2$O or more, 470 mmH$_2$O or more, 480 mmH$_2$O or more, 490 mmH$_2$O or more, 500 mmH$_2$O or more, 510 mmH$_2$O or more, 520 mmH$_2$O or more, 530 mmH$_2$O or more, 540 mmH$_2$O or more, 550 mmH$_2$O or more, 560 mmH$_2$O or more, 570 mmH$_2$O or more, 580 mmH$_2$O or more, 590 mmH$_2$O or more, or 600 mmH$_2$O or more. Here, the upper limit of the draw resistance may be, for example, 920 mmH$_2$O or less, specifically, 900 mmH$_2$O or less, 850 mmH$_2$O or less, 800 mmH$_2$O or less, 750 mmH$_2$O or less, 700 mmH$_2$O or less, or 650 mmH$_2$O or less.

In one or more embodiments, when the lyocell material is used in a regular filter (e.g., a filter rod with a circumference of 19 mm or more, wherein, the lower limit of the circumference may be, for example, 19.5 mm or more, 20.0 mm or more, 20.5 mm or more, 21.0 mm or more, 21.5 mm or more, 22.0 mm or more, 22.5 mm or more, 23.0 mm or more, 23.5 mm or more, 24.0 mm or more, 24.5 mm or more, 25 mm or more, 25.5 mm or more, 26.0 mm or more, or 26.5 mm or more, and the upper limit of the circumference may be, for example, 27.0 mm or less, 26.5 mm or less, 26.0 mm or less, 25.5 mm or less, 25.0 mm or less, 24.5 mm or less, 24.0 mm or less, 23.5 mm or less, 23.0 mm or less, 22.5 mm or less, 22.0 mm or less, 21.5 mm or less, 21.0 mm or less, 20.5 mm or less, 20.0 mm or less, or 19.5 mm or less), the lyocell multifilament may have a total fineness ranging from 25,000 denier to 45,000 denier. In detail, the total fineness of the lyocell multifilament used in the regular filter may be 26,000 or more, 27,000 or more, 28,000 or more, 29,000 or more, 30,000 or more, 31,000 or more, 32,000 or more, 33,000 or more, 34,000 or more, 35,000 or more, 36,000 or more, 37,000 or more, 38,000 or more, 39,000 or more, 40,000 or more, 41,000 or more, 42,000 or more, 43,000 or more, or 44,000 or more, and may be 44,000 or less, 43,000 or less, 42,000 or less, 41,000 or less, 40,000 or less, 39,000 or less, 38,000 or less, 37,000 or less, 36,000 or less, 35,000 or less, 34,000 or less, 33,000 or less, 32,000 or less, 31,000 or less, 30,000 or less, 29,000 or less, 28,000 or less, 27,000 or less, or 26,000 or less. In this case, the single fiber fineness of the lyocell mono filament may be 5.0 denier or less, for example, 4.5 denier or less, for example, 4.5 denier or less, 4.0 denier or less, 3.5 denier or less, 3.0 denier or less, 2.5 denier or less, or 2.0 denier or less. The cigarette filter including the lyocell material having such a fineness may have a draw resistance of 185 mmH$_2$O or more as measured according to KS H ISO 6565. In detail, the cigarette filter may have a draw resistance of 190 mmH$_2$O or more, 200 mmH$_2$O or more, 210 mmH$_2$O or more, 220 mmH$_2$O or more, 230 mmH$_2$O or more, 240 mmH$_2$O or more, 250 mmH$_2$O or more, 260 mmH$_2$O or more, 270 mmH$_2$O or more, 280 mmH$_2$O or more, 290 mmH$_2$O or more, 300 mmH$_2$O or more, 310 mmH$_2$O or more, 320 mmH$_2$O or more, 330 mmH$_2$O or more, 340 mmH$_2$O or more, 350 mmH$_2$O or more, 360 mmH$_2$O or more, or 370 mmH$_2$O or more. Here, the upper limit of the draw resistance may be, for example, 500 mmH$_2$O or less, 450 mmH$_2$O or less, or 400 mmH$_2$O or less.

The cigarette filter having such a draw resistance value may provide concentration uniformity and good filter performance for smoke when a user smokes a cigarette.

## Advantageous Effects

According to the present application, a lyocell material for a cigarette filter, which can replace widely commercialized cellulose acetate (CA), and a cigarette filter including the lyocell material. In detail, the present application has advantageous effects of providing not only excellent biodegradability, but also excellent filter manufacturing processability and excellent cigarette properties (e.g., draw resistance).

## Description of Drawings

FIG. 1 is a schematic diagram illustrating a cross section shape, and a modified shape ratio and a width ratio within predetermined ranges, of a lyocell fiber with a modified cross section according to an embodiment of the present disclosure.

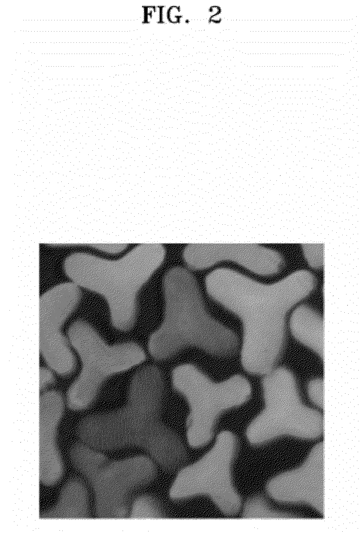

FIG. 2 is an optical image of a cross section of a lyocell material manufactured according to Example 1.

## Best Mode

## Mode for Invention

Hereinafter, the present disclosure will be described in more detail with reference to the following examples. However, the following examples are merely presented to exemplify the present disclosure, and the scope of the present disclosure is not limited thereto.

**Examples and Comparative Examples**

Lyocell materials were manufactured through processes described in Examples and Comparative Examples below. Conditions not specifically mentioned herein are within the scope of the descriptions above.

**Example 1**

Cellulose pulps having a weight average degree of polymerization (DPw) of 820 and including 93.9 % of alpha-cellulose were mixed with a NMMO/$H_2O$ solvent containing 0.01 wt% of propyl gallate to prepare a spinning dope for manufacturing a tow for a cigarette filter with a concentration of 11 wt%. Next, the spinning dope was maintained at a spinning temperature of 110 °C in a spinning nozzle for implementing a Y-shaped cross section and spun by adjusting a discharge amount and a spinning rate such that a single fiber fineness of filaments was adjusted to 3.45 denier.

The spinning dope in the form of filaments discharged from the spinning nozzle was supplied to a coagulation solution (a coagulation solution containing 75 wt% of water and 25 wt% of NMMO and being used at a temperature of about 25 °C) contained in a coagulation bath through an air gap zone. Here, the spinning dope was primarily coagulated in the air gap zone with cooling air at a temperature of 8 °C and an airflow rate of 200 Nm/h. Also, a concentration of the coagulation solution was continuously monitored by using a sensor and a refractometer.

Next, the primarily coagulated lyocell filaments were washed with water. In detail, the filaments were fed into a draw roller to remove NMMO remaining in the filaments by using a washing solution sprayed by a washing device. Next, the washed filaments were immersed in a bath designed to have an oil concentration of 2 wt%.

The filaments were then treated at a pressure of about 2 kgf/cm$^2$ by using a nip roller installed at a discharge portion of the bath and fed into a crimp machine to be able to form crimps. In detail, a ratio of providing of crimps (crimp draft ratio) was set to 1.1 times, and a tow was manufactured by supplying steam pressure to a steam box at 0.5 kgf/cm$^2$, setting a roller pressure of the crimp machine to 2.5 kgf/cm$^2$, and setting a doctor blade pressure to 0.5 kgf/cm$^2$. Herein, the ratio of providing of crimps is calculated as described above.

The manufactured tow was then subjected to secondary oil treating to prevent static electricity and provide flexibility, and immediately after the secondary oil treating, the resulting tow passed through a continuous drying device set at a temperature of 120 °C to obtain a dried tow product. Here, the total fineness of the tow is as shown in Table 1.

**Example 2**

A lyocell tow for a cigarette filter was prepared in the same manner as in Example 1, except that the single fiber fineness of the filaments was adjusted to 4.6 denier. The total fineness of the tow is as shown in Table 1.

**Example 3**

A lyocell tow for a cigarette filter was prepared in the same manner as in Example 1, except that the single fiber fineness of the filaments was adjusted to 5.55 denier. The total fineness of the tow is as shown in Table 1.

**Example 4**

A lyocell tow for a cigarette filter was prepared in the same manner as in Example 1, except that the single fiber fineness of the filaments was adjusted to 6.98 denier. The total fineness of the tow is as shown in Table 1.

**Comparative Example 1**

A lyocell tow for a cigarette filter was prepared in the same manner as in Example 1, except that the single fiber fineness of the filaments was adjusted to 0.55 denier. The total fineness of the tow is as shown in Table 1.

**Comparative Example 2**

A lyocell tow for a cigarette filter was prepared in the same manner as in Example 1, except that the single fiber fineness of the filaments was adjusted to 1.12 denier. The total fineness of the tow is as shown in Table 1.

**Comparative Example 3**

A lyocell tow for a cigarette filter was prepared in the same manner as in Example 1, except that the single fiber fineness of the filaments was adjusted to 1.43 denier. The total fineness of the tow is as shown in Table 1.

**Comparative Example 4**

A lyocell tow for a cigarette filter was prepared in the same manner as in Example 1, except that the single fiber fineness of the filaments was adjusted to 8.85 denier. The total fineness of the tow is as shown in Table 1.

**Comparative Example 5**

A lyocell tow for a cigarette filter was prepared in the same manner as in Example 1, except that the single fiber fineness of the filaments was adjusted to 9.94 denier. The total fineness of the tow is as shown in Table 1.

**Evaluation or measurement for tows of Examples and Comparative Examples**

The following items were measured or evaluated for each of Examples and Comparative Examples, and the results are shown in Table 1.

**1. Tow fineness (denier)**

A sample of the tow to be measured was collected in a size of 2 m and allowed to stand in a constant temperature and humidity room at 20 °C with a humidity of 65 %. After fixing one end of the stabilized tow, the other end thereof was mounted with a 2 kg-weight. After maintaining (stabilizing) the tow elongated by the weight for 5 seconds, the sample was cut to a size of 90 cm and weighed (total fineness). The fineness of the tow was converted into a measured weight $\times$ 10000 value according to a denier conversion method. By dividing the total fineness by the number of strands in the filaments, the single fiber fineness is calculated.

**2. Number of crimps**

Crimps were measured according to the KS K 0326 standards. In detail, tow samples of 20 strands where crimps were not damaged were collected, and each strand was added onto a previously prepared glossy paper sheet (spacing distance of 25 mm) with a celluloid 4 % to 5 % amyl acetate adhesive to be stretched by 25±5 % relative to a length of a single fiber, and then was left stand for drying the adhesive.

The number of crimps of each sample was counted by applying a primary load of 1.96/1000 cN (=2 mgf) per 1 De to each strand by using a crimp tester, and the number of crimps in 25 mm was determined. Then, the upper and lower limits of the number of crimps measured for 20 strands were summarized recorded.

**3. Measurement of modified shape ratio of projection**

A small amount of fiber bundle was sampled, rolled and thinned with black cotton, inserted into a hole in a plate where the cross section could be cut, and cut with a razor blade without pushing the cross section. Then, the cut cross sections were magnified (magnification 200x) by using an optical microscope (BX51, Olympus), and the images were saved with a digital camera.

By using the Olympus Soft Imaging Solution program, L (projection length), W (projection width), circumference, and the like of the modified cross section yarn to be measured were analyzed from the cross section images of the fiber. Here, the L, W, and modified shape ratio were calculated in the same way as previously defined.

**4. Measurement of width ratio of projection**

Samples were prepared in the same manner as for the modified shape ratio measurement described above. Then, by using the Olympus Soft Imaging Solution program for the cross section images of the fiber, a projection width ($W_1$) at a point corresponding to 10 % of the baseline length (length (L) measured with respect to the modified shape ratio) to be measured and a projection width ($W_2$) at a point corresponding to 90 % of the baseline length (length L measured with respect to the modified shape ratio) from center of the cross section were measured, and the ratio thereof was calculated.

**5. Spinning ability**

After a spinning dope was discharged from a spinneret, it was recorded every hour whether or not cutting occurred on the surface of the spinneret and the number of times it occurred. Depending on the number of cuts that occurred in 24 hours, the evaluation was made as follows:

Good: a case where no cut has occurred for 24 hours

Moderate: a case where cut has occurred once to 4 times for 24 hours

Unmeasurable: a case where cut has occurred at least 5 times for 24 hours.

## 6. Draw resistance and circumference of cigarette filter

Cigarette filter rods (rod weight: 650 mg) were prepared by using the tows prepared in Examples and Comparative Examples above. In detail, the lyocell tow of each of Examples and Comparative Examples was wrapped with a wrapper (porous paper with 6,500 CU) to manufacture a cylinder-shaped filter rod having an axial length of 120 mm and a circumference as shown in the following table.

In addition, draw resistance thereof was measured according to the KS H ISO 6565 standards, and draw resistance of each rod was measured by using a circumference measurer.

[Table 1]

|  | Single fiber fineness of tow | Spinning ability | Number of crimps (ea/ inch) | Total fineness of tow | Modified shape ratio (Equation 1) | Width ratio (Equation 2) | Draw resistance of filter (mmH$_2$O) | Circumference (mm) |
|---|---|---|---|---|---|---|---|---|
| Exampl e 1 | 3.45 | Good | 34-38 | 35400 | 1.51 | 1.54 | 305 | 242 (regular) |
| Exampl e 2 | 4.6 | Good | 30-34 | 30700 | 208 | 1.36 | 220 | 24.4 (regular) |
| Exampl e3 | 5.55 | Good | 28-32 | 23000 | 2.23 | 1.22 | 410 | 18.8 (slim) |
| Exampl e 4 | 6.98 | Good | 30-34 | 19700 | 2.53 | 1.12 | 520 | 16.6 (ultra-slim) |
| Compar ative Exampl e 1 | 0.55 | Defective (impossibl e to continuou sly manufactu re) | - | - | 0.38 | 2.16 | Unmeasur able (impossibl e to manufactu re a tow) | - |
| Compar ative Exampl e 2 | 1.12 | Good | 40-48 | 46500 | 1.05 | 2.54 | 170 | 23.6 (regular) |
| Compar ative Exampl e 3 | 1.43 | Good | 38-42 | 45500 | 1.16 | 2.47 | 160 | 23.8 (regular) |
| Comparative Exampl e 4 | 8.55 | Good | 22-30 | 14800 | 2.72 | 2.38 | 360 | 171 (ultra-slim) |
| Compar ative Exampl e 5 | 9.94 | Good | 18-28 | 13400 | 2.84 | 2.16 | 340 | 170 (ultra-slim) |

As shown in Table 1, it was confirmed that the tows of Examples of the present application had a satisfied predetermined shape and a satisfied fineness within a predetermined range and was able to provide improved draw resistance.

However, in the case of Comparative Example 1, the spinning conditions were not appropriate, and thus tows could not be manufactured, and filter performance (draw resistance) of filters could not be identified. In addition, in the case of Comparative Examples 2 to 5 in which the shape and fineness of the modified cross sections were different from those of Examples, it was confirmed that both a regular filter (with a circumferential size of about 23 mm to 24.5 mm) and an (ultra-)slim filter (with a circumferential size of about 16 mm to 19 mm) provided lower draw resistance than Examples with corresponding circumferential sizes.

**Claims**

1. A method of manufacturing a lyocell material with a modified cross section for a cigarette filter, the method comprising:

   spinning a lyocell dope by using a spinneret that is capable of forming a modified cross section having at least three projections;
   coagulating the lyocell dope spun to obtain a lyocell multifilament;
   oil treating the lyocell multifilament; and
   providing crimps by feeding the lyocell multifilament that has undergone the oil treating into a crimp machine such that the lyocell multifilament is supplied with steam and pressure,
   wherein the lyocell multifilament includes a monofilament with a modified cross section,
   the modified cross section has at least three projections,
   the at least three projections each have a modified shape ratio of 0.6 or more as calculated by Equation 1 and a width ratio of 0.5 to 2.0 as calculated by Equation 2, and
   the lyocell multifilament has a total fineness of 15,000 denier to 45,000 denier, and monofilaments constituting the lyocell multifilament have a single fiber fineness of 1.5 denier to 8.0 denier:

$$<\text{Equation 1}>$$
$$\text{Modified shape ratio} = L/W$$

$$<\text{Equation 2}>$$
$$\text{Width ratio} = W_1/W_2$$

   (wherein, in Equations 1 and 2, L represents a length of each of the three projections, the length being calculated as a distance from the center of a straight line connecting two points where one projection meets two projections directly adjacent to the one projection to the end point of the one projection, and W represents a width of each of the three projections, the width being calculated as an arithmetic mean of a projection width ($W_1$) at a point corresponding to 10 % of the length L and a projection width ($W_2$) at a point corresponding to 90 % of the length L).

2. The method of claim 1, wherein,

   in the providing of crimps, a pressure by a roller is applied onto the lyocell multifilament, and
   the providing of crimps is performed to satisfy a crimp draft ratio represented by Expression 1:

$$<\text{Expression 1}>$$
$$1.01 \leq \text{crimp draft ratio} \leq 1.30$$

   (wherein, in Expression 1, the crimp draft ratio is calculated as $V_1/V_0$, wherein $V_0$ represents a movement rate of the filament before feeding the multifilament that has undergone the oil treating into the crimp machine, and $V_1$ represents a passing rate of the filament gripped by a roller in the crimp machine).

3. The method of claim 1, wherein a tow having 20 crimps per inch to 50 crimps per inch is provided.

4. The method of claim 1, wherein the lyocell multifilament has a total fineness of 15,000 denier to 25,000 denier.

5. The method of claim 1, wherein the lyocell multifilament has a total fineness of 25,000 denier to 45,000 denier.

6. A lyocell material with a modified cross section for a cigarette filter, wherein the lyocell material is a crimped tow manufactured by crimping a lyocell multifilament,

the lyocell multifilament has a total fineness of 15,000 denier to 45,000 denier,
monofilaments constituting the lyocell multifilament a single fiber fineness of 1.5 denier to 8.0 denier,
the lyocell multifilament has a monofilament with a modified cross section,
the modified cross section has at least three projections, and
the projections each have a modified shape ratio of 0.6 or more as calculated by Equation 1 and a width ratio of 0.5 to 2.0 as calculated by Equation 2:

$$\text{<Equation 1>}$$
$$\text{Modified shape ratio} = L/W$$

$$\text{<Equation 2>}$$
$$\text{Width ratio} = W_1/W_2$$

(wherein, in Equations 1 and 2, L represents a length of each of the three projections, the length being calculated as a distance from the center of a straight line connecting two points where one projection meets two projections directly adjacent to the one projection to the end point of the one projection, and W represents a width of each of the three projections, the width being calculated as an arithmetic mean of a projection width ($W_1$) at a point corresponding to 10 % of the length L and a projection width ($W_2$) at a point corresponding to 90 % of the length L).

7. The lyocell material of claim 6, wherein

the lyocell material is manufactured by being fed into a crimp machine to be able to provide crimps under conditions that satisfy a crimp draft ratio represented by Expression 1:

$$\text{<Expression 1>}$$
$$1.01 \leq \text{crimp draft ratio} \leq 1.30$$

(wherein, in Expression 1, the crimp draft ratio is calculated as $V_1/V_0$, wherein $V_0$ represents a movement rate of the filament before feeding the multifilament into the crimp machine, and $V_1$ represents a passing rate of the filament gripped by a roller in the crimp machine).

8. The lyocell material of claim 6, wherein the lyocell material has 20 crimps per inch to 50 crimps per inch.

9. The lyocell material of claim 6, wherein the lyocell multifilament has a total fineness of 15,000 denier to 25,000 denier.

10. The lyocell material of claim 6, wherein the lyocell multifilament has a total fineness of 25,000 denier to 45,000 denier.

11. A method of manufacturing a cigarette filter including a lyocell material with a modified cross section, the method comprising:

spinning a lyocell dope by using a spinneret that is capable of forming a modified cross section having at least three projections;
coagulating the lyocell dope spun to obtain a lyocell multifilament;
oil treating the lyocell multifilament;
providing crimps by feeding the lyocell multifilament that has undergone the oil treating into a crimp machine such that the lyocell multifilament is supplied with steam and pressure; and
manufacturing a filter by using a tow provided with the crimps,
wherein the lyocell multifilament includes a monofilament with a modified cross section,
the modified cross section has at least three projections,
each of the projections has a modified shape ratio of 0.6 or more as calculated by Equation 1 and a width ratio of 0.5 to 2.0 as calculated by Equation 2, and
the lyocell multifilament has a total fineness of 15,000 denier to 45,000 denier, and monofilaments constituting the lyocell multifilament have a single fiber fineness of 1.5 denier to 8.0 denier:

<Equation 1>
Modified shape ratio = L/W

<Equation 2>
Width ratio = $W_1/W_2$

(wherein, in Equations 1 and 2, L represents a length of each the three projections, the length being calculated as a distance from the center of a straight line connecting two points where one projection meets two projections directly adjacent to the one projection to the end point of the one projection, and W represents a width of each of the three projections, the width being calculated as an arithmetic mean of a projection width ($W_1$) at a point corresponding to 10 % of the length L and a projection width ($W_2$) at a point corresponding to 90 % of the length L).

**12.** The method of claim 11, wherein,

in the providing of crimps, a pressure by a roller is applied onto the lyocell multifilament, and
the providing of crimps is performed to satisfy a crimp draft ratio represented by Expression 1:

<Expression 1>
$1.01 \leq$ crimp draft ratio $\leq 1.30$

(wherein, in Expression 1, the crimp draft ratio is calculated as $V_1/V_0$, wherein $V_0$ represents a movement rate of the filament before feeding the multifilament that has undergone the oil treating into the crimp machine, and $V_1$ represents a passing rate of the filament gripped by a roller in the crimp machine).

**13.** The method of claim 11, wherein the tow has 20 crimps per inch to 50 crimps per inch.

**14.** The method of claim 11, wherein

the lyocell multifilament has a total fineness of 15,000 denier to 25,000 denier and
a draw resistance of 370 mmH$_2$O or more as measured based on KS H ISO 6565,
(wherein, the draw resistance is measured for a filter with a circumference of 19 mm or less).

**15.** The method of claim 11, wherein

the lyocell multifilament has a total fineness of 25,000 denier to 45,000 denier and
a draw resistance of 185 mmH$_2$O or more as measured based on KS H ISO 6565,
(wherein, the draw resistance is measured for a filter with a circumference of 19 mm or more).

**16.** A cigarette filter comprising a lyocell material with a modified cross section,

wherein the lyocell material with a modified cross section is a crimped tow manufactured by crimping a lyocell multifilament,
the lyocell multifilament has a total fineness of 15,000 denier to 45,000 denier,
monofilaments constituting the lyocell multifilament a single fiber fineness of 1.5 denier to 8.0 denier,
the lyocell multifilament has a monofilament with a modified cross section,
the modified cross section has at least three projections, and
the at least three projections each have a modified shape ratio of 0.6 or more as calculated by Equation 1 and a width ratio of 0.5 to 2.0 as calculated by Equation 2:

<Equation 1>

Modified shape ratio = L/W

<Equation 2>

Width ratio = $W_1/W_2$

(wherein, in Equations 1 and 2, L represents a length of each of the three projections, the length being calculated as a distance from the center of a straight line connecting two points where one projection meets two projections directly adjacent to the one projection to the end point of the one projection, and W represents a width of each of the three projections, the width being calculated as an arithmetic mean of a projection width ($W_1$) at a point corresponding to 10 % of the length L and a projection width ($W_2$) at a point corresponding to 90 % of the length L).

**17.** The cigarette filter of claim 16, wherein

the lyocell material is manufactured by being fed into a crimp machine to be able to provide crimps under conditions that satisfy a crimp draft ratio represented by Expression 1:

<Expression 1>

$1.01 \leq$ crimp draft ratio $\leq 1.30$

(wherein, in Expression 1, the crimp draft ratio is calculated as $V_1/V_0$, wherein $V_0$ represents a movement rate of the filament before feeding the multifilament into the crimp machine, and $V_1$ represents a passing rate of the filament gripped by a roller in the crimp machine).

**18.** The cigarette filter of claim 16, wherein the crimped tow has 20 crimps per inch to 50 crimps per inch.

**19.** The cigarette filter of claim 16, wherein

the lyocell multifilament has a total fineness of 15,000 denier to 25,000 denier, and
the cigarette filter has a draw resistance of 370 mmH$_2$O or more as measured based on KS H ISO 6565
(wherein the draw resistance is measured for a filter with a circumference of 19 mm or less).

**20.** The cigarette filter of claim 16, wherein

the lyocell multifilament has a total fineness of 25,000 denier to 45,000 denier, and
the cigarette filter has a draw resistance of 185 mmH$_2$O or more as measured based on KS H ISO 6565
(wherein the draw resistance is measured when a filter rod with a circumference of 19 mm or more is manufactured).

FIG. 1

FIG. 2

# INTERNATIONAL SEARCH REPORT

| International application No. |
|---|
| **PCT/KR2022/021314** |

## A. CLASSIFICATION OF SUBJECT MATTER

**A24D 3/06**(2006.01)i; **A24D 3/08**(2006.01)i; **D01F 2/00**(2006.01)i; **D01D 5/06**(2006.01)i; **D01D 5/22**(2006.01)i; **B01D 39/18**(2006.01)i

According to International Patent Classification (IPC) or to both national classification and IPC

## B. FIELDS SEARCHED

Minimum documentation searched (classification system followed by classification symbols)

A24D 3/06(2006.01); A24B 15/167(2020.01); A24D 3/02(2006.01); A24D 3/04(2006.01); A24D 3/10(2006.01); A24F 40/57(2020.01); C08L 1/12(2006.01); D02G 1/20(2006.01); D06M 15/01(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 라이오셀 (lyocell), 필터 (filter), 필라멘트 (filament), 코팅 (coating), 크림프 (crimp)

## C. DOCUMENTS CONSIDERED TO BE RELEVANT

| Category* | Citation of document, with indication, where appropriate, of the relevant passages | Relevant to claim No. |
|---|---|---|
| A | KR 10-2016-0081726 A (KOLON INDUSTRIES, INC. et al.) 08 July 2016 (2016-07-08)<br>See claims 1 and 7-9. | 1-20 |
| A | US 2021-0315255 A1 (NICOVENTURES TRADING LIMITED) 14 October 2021 (2021-10-14)<br>See entire document. | 1-20 |
| A | US 2021-0244088 A1 (ACETATE INTERNATIONAL, LLC) 12 August 2021 (2021-08-12)<br>See entire document. | 1-20 |
| A | KR 10-2017-0075849 A (KOLON INDUSTRIES, INC. et al.) 04 July 2017 (2017-07-04)<br>See entire document. | 1-20 |
| A | KR 10-2007-0039547 A (CELANESE ACETATE, LLC) 12 April 2007 (2007-04-12)<br>See entire document. | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 March 2023** | **24 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/021314**

| Patent document cited in search report | | | Publication date (day/month/year) | Patent family member(s) | | | Publication date (day/month/year) |
|---|---|---|---|---|---|---|---|
| KR | 10-2016-0081726 | A | 08 July 2016 | CN | 107109707 | A | 29 August 2017 |
| | | | | CN | 107109707 | B | 07 April 2020 |
| | | | | EP | 3241452 | A1 | 08 November 2017 |
| | | | | EP | 3241452 | A4 | 15 August 2018 |
| | | | | JP | 2018-504897 | A | 22 February 2018 |
| | | | | JP | 6535742 | B2 | 26 June 2019 |
| | | | | KR | 10-2211186 | B1 | 03 February 2021 |
| | | | | US | 10617146 | B2 | 14 April 2020 |
| | | | | US | 2018-0007952 | A1 | 11 January 2018 |
| | | | | WO | 2016-108508 | A1 | 07 July 2016 |
| US | 2021-0315255 | A1 | 14 October 2021 | EP | 4135536 | A1 | 22 February 2023 |
| | | | | KR | 10-2023-0004565 | A | 06 January 2023 |
| | | | | WO | 2021-209903 | A1 | 21 October 2021 |
| US | 2021-0244088 | A1 | 12 August 2021 | CN | 114981311 | A | 30 August 2022 |
| | | | | EP | 4103621 | A1 | 21 December 2022 |
| | | | | KR | 10-2022-0141329 | A | 19 October 2022 |
| | | | | WO | 2021-163171 | A1 | 19 August 2021 |
| KR | 10-2017-0075849 | A | 04 July 2017 | KR | 10-2296584 | B1 | 01 September 2021 |
| KR | 10-2007-0039547 | A | 12 April 2007 | CN | 100973072 | A | 30 May 2007 |
| | | | | CN | 100973072 | B | 31 October 2012 |
| | | | | EP | 1766115 | A2 | 28 March 2007 |
| | | | | EP | 1766115 | A4 | 15 July 2009 |
| | | | | JP | 2008-504454 | A | 14 February 2008 |
| | | | | JP | 4369515 | B2 | 25 November 2009 |
| | | | | KR | 10-0837769 | B1 | 13 June 2008 |
| | | | | US | 2005-0287368 | A1 | 29 December 2005 |
| | | | | WO | 2006-007018 | A2 | 19 January 2006 |
| | | | | WO | 2006-007018 | A3 | 28 September 2006 |

Form PCT/ISA/210 (patent family annex) (July 2022)